# EUROPEAN PATENT APPLICATION

(11) **EP 4 339 918 A1**
(43) Date of publication of application: **20.03.2024**
(21) Application number: 22807411.8
(22) Date of filing: 06.05.2022
(51) Int. Cl.: G08G 1/16

(54) **OBSERVATION DEVICE**

(30) Priority: 10.05.2021 JP 2021079992
(71) Applicant: Kyocera Corporation, Kyoto-shi Kyoto 612-8501 (JP)
(72) Inventor: FUKUDA, Toshinobu, Kyoto-shi, Kyoto 612-8501 (JP)
(74) Representative: Viering, Jentschura & Partner mbB Patent- und Rechtsanwälte
(86) International application number: PCT/JP2022/019602
(87) International publication number: WO 2022/239709

(57) **Abstract**

An observation device 10 includes an observation unit 17, storage 18, and a controller 19. The observation unit 17 observes a predetermined area. The storage 18 stores a visibility distance, which is the maximum distance at which an observation target is identifiable within the predetermined area. The controller 19 identifies the distances to the position of the observation target on the basis of an observation result from the observation unit 17. The controller 19 updates the visibility distance stored in the storage 18 on the basis of the identified distance.

## Description

### CROSS-REFERENCE TO RELATED APPLICATIONS

This application claims priority based on Japanese Patent Application No. 2021-079992 filed May 10, 2021, the entire disclosure of which is hereby incorporated by reference.

### TECHNICAL FIELD

The present disclosure relates to an observation device.

### BACKGROUND OF INVENTION

Recent years have seen progress in the development of a safe driving support system. The safe driving support system involves installing an observation device on the roadside to detect the presence of an observation target such as a vehicle or pedestrian, and notifying an approaching vehicle about the presence of an observation target according to the distance to the observation target. One possibility is that a driver may rely on a presence notification sent from the observation device in a location provided with the safe driving support system. Thus, the driver may perceive the situation to be safe when no presence notification occurs in a location provided with the safe driving support system.

A presence notification is not sent from the observation device to the approaching vehicle when an observation target is not actually present within the detection range of the observation device. However, a presence notification likewise is not sent when the observation device is not currently in operation. Accordingly, one proposal suggests reporting the operational status of the observation device to the approaching vehicle (see Patent Literature 1).

### CITATION LIST

### PATENT LITERATURE

Patent Literature 1: Japanese Unexamined Patent Application Publication No. 2007-272598

### SUMMARY

In a first aspect, an observation device includes an observation unit, storage, and a controller. The observation unit is configured to observe a predetermined area. The storage is configured to store a visibility distance. The visibility distance is a maximum distance at which an observation target is identifiable within the predetermined area. The controller is configured to identify the distance to the position of the observation target on a basis of an observation result from the observation unit, and use the identified distance as a basis for updating the visibility distance stored in the storage.

### BRIEF DESCRIPTION OF THE DRAWINGS

FIG. 1 is a diagram illustrating an example configuration of a communication system including an observation device according to an embodiment.
FIG. 2 is a block diagram illustrating a schematic configuration of the observation device in FIG. 1.
FIG. 3 is a state diagram illustrating a fixed state of the observation device in FIG. 1.
FIG. 4 is a table illustrating type categories stored in the storage in FIG. 2.
FIG. 5 is a table illustrating speed categories stored in the storage in FIG. 2.
FIG. 6 is a table illustrating temperature categories stored in the storage in FIG. 2.
FIG. 7 is a flowchart for explaining an update process to be executed by the controller in FIG. 2.
FIG. 8 is a flowchart for explaining a notification information transmission process to be executed by the controller in FIG. 2.

### DESCRIPTION OF EMBODIMENTS

The following refers to the drawings to describe an embodiment of an observation device to which the present disclosure is applied.

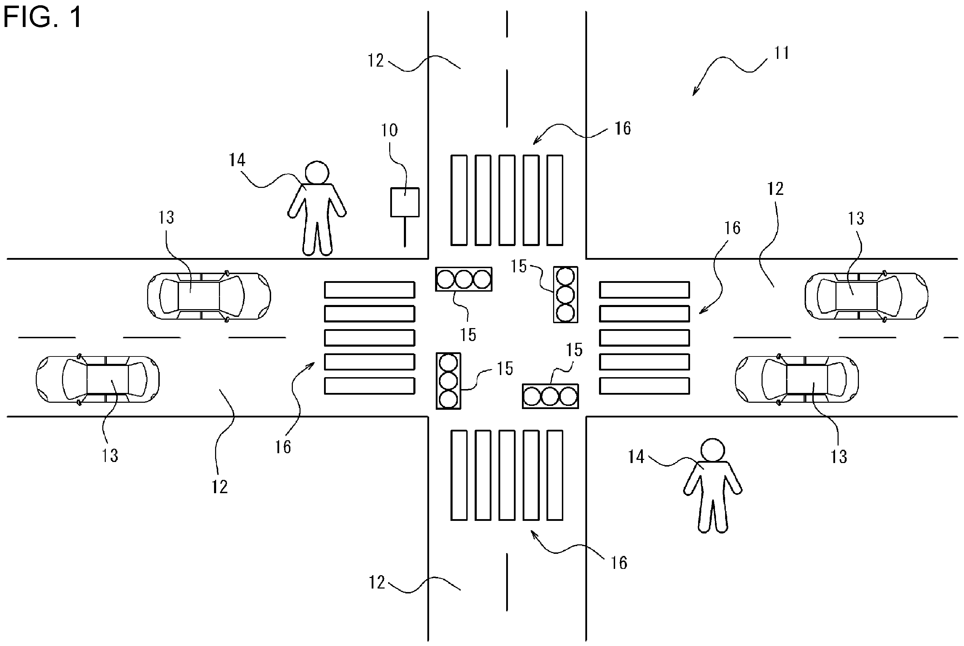

FIG. 1 is a diagram illustrating an example configuration of a communication system 11 including an observation device 10 according to an embodiment. The communication system 11 is an Intelligent Transport Systems (ITS) safe driving support communication system, for example. A safe driving support communication system is also referred to as a safe driving support system or a safe driving support wireless system.

The observation device 10 may be a device that observes observation targets such as vehicles, objects, and people on a road. The observation device 10 is a roadside unit or a monitoring camera device, for example. In the present embodiment, the observation device 10 is a roadside unit that may be disposed near an intersection where a plurality of roads 12 (streets) intersect to observe the road surface. For example, the observation device 10 may observe a road surface leading from an intersection in the extension direction of a road connected to the intersection. The observation device 10 may be disposed at a roadside other than an intersection.

In the communication system 11, the observation device 10 and a vehicle 13, such as an automobile traveling on the roads 12, may communicate with each other wirelessly. A plurality of vehicles 13 may communicate with one another wirelessly. An electronic device carried by a pedestrian 14 may also communicate wirelessly in the communication system 11. The electronic devices are mobile terminal devices such as smartphones, for example.

The observation device 10 may notify the vehicle 13 of notification information for supporting safe driving by the driver of the vehicle 13. The safe driving support information may include information pertaining to an observation target present on the observed road. Information pertaining to an observation target may include the presence or absence of an observation target, the type of observation target that is present, the distance to the observation device, the speed of travel, and the direction of travel. The notification information may include information pertaining to a visibility distance. The notification information may include information pertaining to the lighting of a traffic signal 15, information pertaining to road regulations, and road alignment information indicating, among other things, the shape of the intersection (the shapes of the roads 12) where the observation device 10 is disposed. The notification information may include information reported by another vehicle 13. The observation device 10 may report the notification information to the electronic device carried by the pedestrian 14.

The vehicle 13 may transmit vehicle information to the observation device 10 and the like periodically, for example. The vehicle information includes information pertaining to the position, speed, and direction indicators of the vehicle 13, for example. The vehicle 13 may acquire various information reported by the observation device 10 and the like via an onboard electronic device. The electronic device onboard the vehicle 13 is a car navigation system, for example. The electronic device onboard the vehicle 13 may support safe driving by the driver by notifying the driver of warnings and the like on the basis of information reported by the observation device 10. A notification to the driver may indicate the type, position, speed, direction of travel, and the like of an observation target such as another vehicle 13 or a pedestrian approaching in the vicinity of the intersection. As above, the communication system 11 may support safe driving by the driver of the vehicle 13. The vehicle 13 is not limited to an automobile. For example, the vehicle 13 may include a motorcycle, a bus, a tram, and a bicycle.

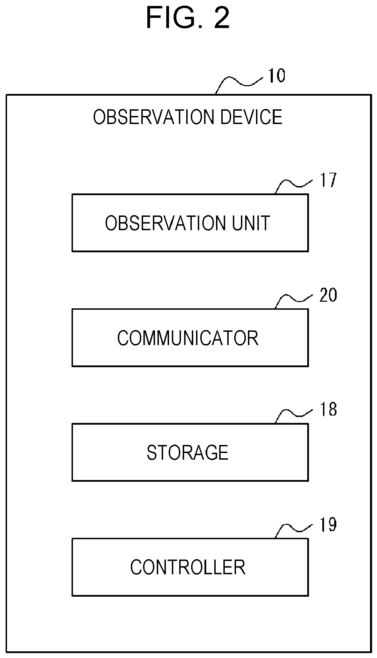

The following describes details of the observation device 10. As illustrated in FIG. 2, the observation device 10 includes an observation unit 17, storage 18, and a controller 19. The observation device 10 may further include a communicator 20.

The observation unit 17 observes a predetermined area. More specifically, the observation unit 17 may observe a predetermined area by detecting an electromagnetic wave incident from the predetermined area. The observation unit 17 may include at least one sensor.

The sensor may detect an electromagnetic wave incident from within a detection area. The sensor may be, for example, a visible light camera and a FIR camera or other such camera configured to capture a far-infrared image. The sensor may also be a distance measurement sensor, such as a millimeter-wave radar, LiDAR, and ultrasonic sonar. The visible light camera can capture a normal image (RGB image) of a subject. The FIR camera can capture a far-infrared image that depends on temperature. The FIR camera can detect the temperature of a subject which is the observation target. The distance measurement sensor may emit a projected wave and measure a distance value to a reflection point on an object irradiated by the projected wave. The distance measurement sensor may measure the distance value on the basis of the time from the emission time of the projected wave to the time of receiving a wave reflected by the object.

The sensor may generate a detection signal on the basis of the detection of an electromagnetic wave. When the sensor is configured as a camera, the detection signal may be an image. When the sensor is configured as a distance measurement sensor, the detection signal may be a distance distribution. The distance distribution includes a distance value for each direction where a reflected wave is generated in response to a projected wave such as a millimeter wave, near-infrared light, or a sound wave. The sensor may generate the detection signal on a certain cycle. The detection signal generation cycle is 100 ms, for example.

The observation unit 17 may have a predefined observation coordinate system. The observation coordinate system may be a three-dimensional coordinate system having an origin located at any position in the observation unit 17, with three mutually perpendicular axes passing through the origin as coordinate axes. The origin of the observation coordinate system is at the intersection point between a detection axis and a detector element of a freely chosen sensor in the observation unit 17, for example. The observation coordinate system includes a line parallel to the detection axis of the chosen sensor as a coordinate axis, for example. The detection axis may be the central axis of a detection range of the sensor. In the case of a camera, the detection axis is the optical axis, for example.

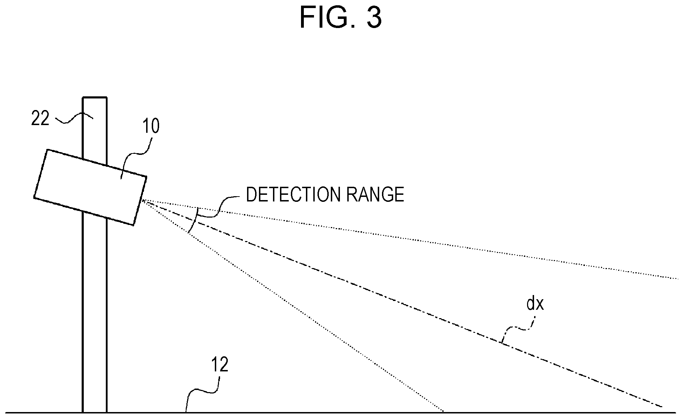

As illustrated in FIG. 3, the observation device 10 may be secured to a structure 22 with height allowing for imaging of an outdoor scene that includes the roads 12. The structure may be a signal device, a utility pole, or a streetlight near the intersection where the roads 12 to be observed intersect, for example. The position and orientation of the observation unit 17 with respect to the structure 22 may be fixed in advance. For example, the observation device 10 may be secured to the structure 22 so that the upper edge of the detection range of the observation device 10 is parallel with a portion of a road, thereby enabling more distant observation.

The position of the observation unit 17 means the origin of the observation coordinate system relative to a reference position in a world coordinate system. The orientation of the observation unit 17 means the tilt of the coordinate axes of the observation coordinate system relative to the coordinate axes of the world coordinate system. In the present disclosure, the "world coordinate system" means a coordinate system set on the basis of a three-dimensional space outside the observation unit 17. The world coordinate system may have the vertical direction in the real space and two mutually perpendicular directions parallel to the horizontal plane as axes.

The position and orientation of the observation unit 17 may be fixed so that the detection axis dx of the observation unit 17 intersects the road surface of the roads 12. The position and orientation of the observation unit 17 may be fixed so that the detection range of the observation unit 17 includes a predetermined area defined relative to the observation device 10.

In FIG. 2, the storage 18 includes a storage device of any kind, such as random access memory (RAM) and read-only memory (ROM), for example. The storage 18 may store various programs for causing the controller 19 to exhibit functionality and various information to be used by the controller 19.

When the configuration of the observation unit 17 includes a distance measurement sensor, the storage 18 may store a distance value for each of multiple directions from the distance measurement sensor to the road surface or floor surface. The distance value from the distance measurement sensor to the road surface may be sampled by securing the observation unit 17 to the structure 22 and causing the observation unit 17 to detect the distance to the distance measurement sensor in a state with nothing present on the road surface or floor surface. The state of being on the road surface or floor surface may mean the state of being in contact with the road surface or floor surface.

When the configuration of the observation unit 17 includes a camera, the storage 18 may store a conversion formula or conversion table for the case in which a pixel in an image acquired from the camera indicates an object on the road surface or floor surface. In this case, the conversion formula or conversion table is used to convert from coordinates in a two-dimensional coordinate system of the pixel to coordinates in the world coordinate system. The conversion formula or conversion table can be used to obtain the position in the world coordinate system and the distance to the observation unit 17 of an object on the road surface or floor surface included in an image acquired from the camera.

The storage 18 stores a visibility distance for an observation target in the predetermined area of the observation unit 17. The visibility distance is the maximum distance at which the controller 19 can identify an observation target on the basis of a detection signal. The storage 18 may store the visibility distance associated with a respective one of categories based on types of observation targets. The types of observation targets are pedestrian, bicycle, motorcycle, ordinary vehicle, and large vehicle, for example. The storage 18 may store an initial value and a current value of the visibility distance. The initial value may be a design value according to the sensor used in the observation unit 17 or a measured value obtained in an environment that does not interfere with observation by the observation device 10. As described later, the current value may be a visibility distance updated at the most recent timing.

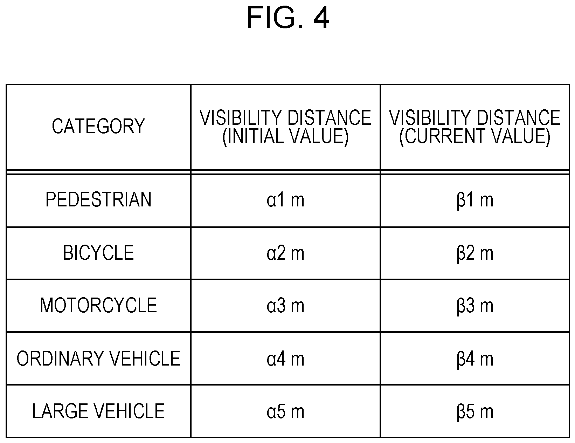

The categories based on types of observation targets may include type categories that are the types themselves. Consequently, as illustrated in FIG. 4, the storage 18 may store an initial value and a current value of a visibility distance associated with each of the categories of pedestrian, bicycle, motorcycle, ordinary vehicle, and large vehicle, for example.

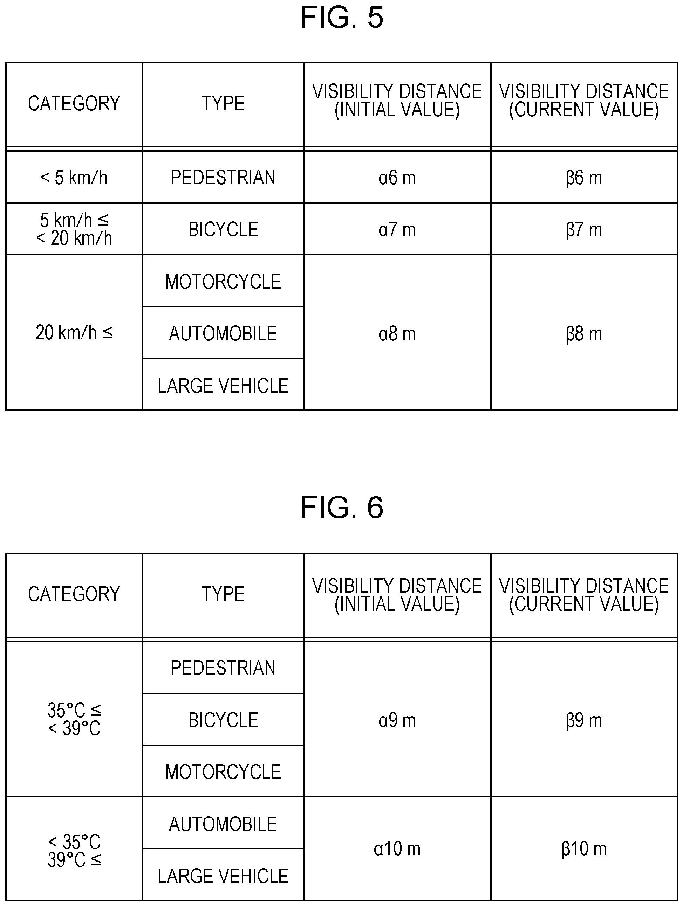

The categories based on types of observation targets may include speed categories classified on the basis of the speed anticipated for each type of observation target. Consequently, as illustrated in FIG. 5, the storage 18 may store a visual distance associated with each of a category less than 5 km/h for classifying a pedestrian, a category equal to or greater than 5 km/h and less than 20 km/h for classifying a bicycle, and a category equal to or greater than 20 km/h for classifying a motorcycle, an ordinary vehicle, and a large vehicle, for example.

The categories based on types of observation targets may include temperature categories classified on the basis of the temperature anticipated for each type of observation target. Consequently, as illustrated in FIG. 6, the storage 18 may store a visual distance associated with each of a classification that considers the category equal to or greater than 35°C and less than 39°C to be a pedestrian, a bicycle, and a motorcycle, each of which has an exposed human body, and a classification that considers the category less than 35°C or equal to or greater than 39°C to be ordinary vehicle and a large vehicle, for example.

The storage 18 may store a warning distance requiring a warning. The storage 18 may store the warning distance for each road 12 included in the predetermined area. The warning distance may be the shortest distance from the observation target to the observation device 10 at which to issue a warning in the event of an approaching observation target. The warning distance may be calculated on the basis of the speed of an observation target on the road 12, for example. The speed of an observation distance may be determined on the basis of the speed limit for the relevant road 12 or an average of speeds measured for observation targets identified by the controller 19, to be described later. The warning distance may increase in length depending on the speed of the observation target. The storage 18 may store the warning distance for each type of observation target, to be described later.

In FIG. 2, the controller 19 includes at least one processor and a memory. The processor may include a general-purpose processor that loads a specific program to execute a specific function, and a special-purpose processor dedicated to a specific process. The special-purpose processor may include an application-specific integrated circuit (ASIC). The processor may include a programmable logic device (PLD). The PLD may include a field-programmable gate array (FPGA). The controller 19 may also be a system-on-a-chip (SoC) or a system in a package (SiP) in which one or more processors cooperate.

In the following description, the "categories" in each process by the controller 19 may be the same or different categories from the type categories, speed categories, and temperature categories given as examples above.

The controller 19 may detect an observation target in a predetermined area on the basis of an observation result, or more specifically a detection signal, from the observation unit 17. If an observation target is present, the controller 19 may identify the type of observation target on the basis of an observation result from the observation unit 17. The controller 19 may be capable of identification that classifies the observation target into one of a plurality of predetermined types. The plurality of predetermined types are anticipated types of observation targets, such as the above pedestrian, bicycle, motorcycle, ordinary vehicle, and large vehicle, for example. If an observation target is present, the controller 19 may identify the distance from the observation device 10 to the position where the observation target is present, on the basis of an observation result from the observation unit 17.

When the sensor included in the observation unit 17 is a camera, the controller 19 may detect a subject image corresponding to a subject to be observed through known image recognition such as pattern matching or deep learning applied to the image serving as the detection signal. The controller 19 may determine the presence or absence of an observation target through detection of the subject image. The controller 19 may detect a subject image and identify the type of observation target through image recognition. The controller 19 may convert a position of a pixel in the portion of the detected subject image that is in contact with the road surface from the two-dimensional coordinate system to the world coordinate system. In this way, the controller 19 may calculate the position of the observation target corresponding to the subject image in the world coordinate system. The controller 19 may use the position of the observation device 10 in the world coordinate system and the position of the observation target in the world coordinate system to identify the distance from the observation device 10 to the observation target. The controller 19 may identify the distance to the observation target every time the observation device 10 acquires an image. For example, if the sensor included in the observation unit 17 is a 30 fps camera, the controller 19 may identify the distance to the observation target on a frequency of 30 times per second.

When the sensor included in the observation unit 17 is a camera, the controller 19 may extract a distance value that is different from the distance value to the road surface or floor surface, and a direction corresponding to the different distance value, from a distance distribution that serves as the detection signal. In this way, the controller 19 may detect an object on the road surface or floor surface. The control unit 19 may separately detect distance value groups from among distance values corresponding to detected objects. In each distance value group, the distance values differ by a predetermined value or less and the corresponding directions are close to each other. The controller 19 may detect a distance value group as an observation target. The controller 19 may identify the distance to the observation target by averaging the distance values in the distance value group, for example. The controller 19 may estimate the size of the observation target on the basis of the spread of distances and corresponding directions in the distance value group. The controller 19 may identify the type of observation target on the basis of the size of the observation target.

The controller 19 may identify the speed and direction of travel of the detected observation target on the basis of a plurality of detection signals with consecutive detection times.

The controller 19 updates the visibility distance stored in the storage 18 on the basis of the identified distance to the position where the observation target is present. More specifically, the controller 19 may perform the update by replacing the current value of the visibility distance stored in the storage 18 with a distance approved on the basis of an observation result from the observation unit 17. The controller 19 may update the current value of the visibility distance by the type or category of the identified observation target.

The controller 19 may use a detection signal as the basis for approving the replacement distance, that is, the distance for replacing the visibility distance. The controller 19 may use a single detection signal as the basis for approving, as the replacement distance, the maximum value among distances to positions where a plurality of identified observation targets are present. The controller 19 may use a plurality of detection signals as the basis for approving, as the replacement distance, the maximum value among distances to a position where an identified observation target is present. The controller 19 may use a plurality of detection signals as the basis for approving, as the replacement distance, the maximum value among distances detected with respect to an observation target determined to be the same.

The controller 19 may perform the process for updating the visibility distance regularly or periodically. The controller 19 may update the visibility distance by category.

The controller 19 may perform a common update process. In the common update process, the controller 19 temporarily treats the category of an identified type of observation target to approve the replacement distance as a first category. The controller 19 temporarily treats another category different from the first category as a second category. If the replacement distance approved for the first category is less than the visibility distance associated with the first category stored in the storage 18, the controller 19 may also update the visibility distance associated with the second category to less than the replacement distance. The second category may be some or all of the categories other than the first category. Note that the replacement distance approved for any category is the visibility distance updated for the category of the type of determined observation target.

As an example, the determined observation target may be a pedestrian, and the replacement distance approved for the pedestrian may be shorter than the visibility distance for targets of the type belonging to the categories of speeds higher than pedestrian, in other words, targets such as bicycle, motorcycle, ordinary vehicle, and large vehicle. In this case, the controller 19 replaces not only the visibility distance for pedestrian but also the visibility distance for bicycle, motorcycle, ordinary vehicle, and large vehicle with the approved replacement distance.

The controller 19 may execute the common update process upon meeting a first condition. The first condition is a condition regarding a decrease in the number of observation targets passing through a predetermined area. For example, the first condition may be that the traffic volume on the road 12 observed by the observation device 10 belongs to a time period of lower traffic volume at or below a first threshold. The first condition may be that the average number of observation targets detected on the basis of observation results during a sample time of predetermined duration is, for example, not more than 50% the maximum value among the averages for all other sample times within a 24 hour period. The first condition may be that an observation target is not detected for at least a predetermined time since the last observation result in which an observation target was detected.

The first condition may be met after the common update process, and the distance to the position of an observation target determined in a new observation result may be greater than the visibility distance set for the category to which the observation target belongs. In this case, the controller 19 may update only the visual distance associated with the relevant category. In other words, the controller 19 may maintain the visual distance associated with categories other than the relevant category, without updating to acquire an additional replacement distance for an observation in a category associated with the relevant category. Note that, as described above, the replacement distance approved for any category is the visibility distance updated for the category of the type of determined observation target. For example, in the common update process, the controller 19 may decrease the visibility distance for the second category along with an update to decrease the visibility distance for the first category. However, when the controller 19 performs an update to increase the visibility distance increase for any category, the controller 19 does not necessarily increase the visibility distance for another category. Specifically, in the common update process, the controller 19 may decrease the visibility distance for another category along with an update to decrease the visibility distance for the category corresponding to an identified pedestrian. If the visibility distance for a bicycle belonging to another category increases thereafter, the controller 19 may perform an update to increase only the visibility distance for the category corresponding to the bicycle. The controller 19 may also perform an update to increase the visibility distance separately for the first and second categories in the common update process. Specifically, even when the controller 19 performs an update to increase the visibility distance for the second category, the controller 19 does not necessarily increase the visibility distance for the first category. More specifically, in the common update process, the controller 19 may decrease the visibility distance for another category along with an update to decrease the visibility distance for the category corresponding to an identified pedestrian. If the visibility distance for a bicycle increases thereafter, the controller 19 may perform an update to increase only the visibility distance for the bicycle category and another category included in the second category together with the bicycle category. Even when the controller 19 performs an update to increase the visibility distance for the first category, the controller 19 does not necessarily increase the visibility distance for the second category. More specifically, in the common update process, the controller 19 may decrease the visibility distance for another category along with an update to decrease the visibility distance for the category corresponding to an identified pedestrian. If the visibility distance for a pedestrian increases thereafter, the controller 19 may perform an update to increase only the visibility distance for the category corresponding to the pedestrian.

If the first condition is not met, the controller 19 may perform an update separately for the category of the observation target identified by the observation result and update only the visibility distance associated with the relevant category in the storage 18.

If an observation target is not present in the observation result, or in other words, if an observation target is not detected, the controller 19 may create information pertaining to visibility distance. The controller 19 may create the information pertaining to visibility distance for each type of observation target. For example, upon detecting an ordinary vehicle and a large vehicle on the basis of the observation result, the controller 19 may create information pertaining to visibility distance with respect to the pedestrian, bicycle, and motorcycle that were not detected.

The information pertaining to visibility distance may be the visibility distance itself. The information pertaining to visibility distance may be an evaluation based on a confidence level of the visibility distance. The confidence level of the visibility distance is the current value of the visibility distance with respect to the initial value of the visibility distance, for example. The evaluation based on confidence level may be the confidence level itself or an evaluation graded according to the confidence level. The graded evaluation is high, medium, low in order from highest to lowest, for example.

The controller 19 may create the information pertaining to visibility distance on the basis of the type of observation target and the visibility distance associated with the relevant type. Specifically, the controller 19 may create an evaluation based on the confidence level of the visibility distance described above on the basis of the type and the visibility distance associated with the relevant type. More specifically, the controller 19 may raise the evaluation based on the confidence level of the visibility distance when the visibility distance is equal to or greater than the warning distance. The controller 19 may raise the evaluation based on the confidence level of the visibility distance for each category. Note that the warning distance is stored in the storage 18, as described above.

If at least one type of observation target is not present, the controller 19 may generate notification information including the evaluation based on the confidence level of the visibility distance. The controller 19 may include in the notification information an indication of whether an observation target is present or absent. If at least one type of observation target is present, the controller 19 may include in the notification information the type of observation target, the distance to the observation device 10, the speed, and the direction of travel. The controller 19 may control the communicator 20 to report the generated notification information to the vehicle 13 around the observation device 10.

The communicator 20 may communicate wirelessly with the vehicle 13, under control by the controller 19. The communicator 20 may include a communication circuit and an antenna. The antenna may be a nondirectional antenna, for example. The communicator 20 may communicate wirelessly using the 700 MHz band allocated to ITS, for example. The communicator 20 may communicate wirelessly using a wireless local area network (LAN), for example.

The communicator 20 may perform various processing such as amplification processing on a signal received at the antenna. The communicator 20 may output a processed reception signal to the controller 19. The controller 19 may perform various processing on an inputted reception signal to obtain information included in the reception signal. The communicator 20 may perform various processing such as amplification processing on information obtained from the controller 19. The communicator 20 may wirelessly transmit a processed transmission signal from the antenna.

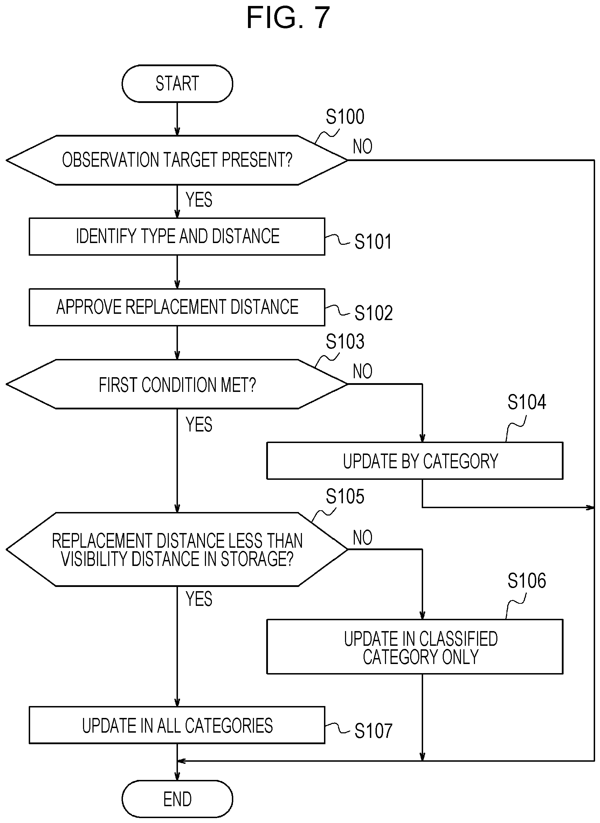

The flowchart in FIG. 7 will be used to describe an update process executed by the controller 19 in the present embodiment. The update process starts regularly or periodically.

In step S100, the controller 19 determines whether an observation result to use for the update process includes an observation target. Note that the observation result to use for the update process is a detection signal specially, and may be the single most recent detection signal or a plurality of detection signals going back a predetermined time period from the start of the update process. If the observation result does not include an observation target, the update process ends. If the observation result includes an observation target, the process proceeds to step S101.

In step S101, the controller 19 identifies the type and distance of the observation target confirmed to be present in step S 100. After identification, the process proceeds to step S102.

In step S102, the controller 19 approves the maximum value among distances identified in step S101 as the replacement distance for each identified type. After approval, the process proceeds to step S103.

In step S103, the controller 19 determines whether the first condition is met. If the first condition is not met, the process proceeds to step S104. If the first condition is met, the process proceeds to step S105.

In step S104, the controller 19 uses the replacement distance for each type approved in step S102 to update the visibility distance associated with the category classifying the relevant type. After updating, the update process ends.

In step S105, the controller 19 determines whether the replacement distance for each type approved in step S 102 is less than the visibility distance associated with the category classifying the relevant type in the storage 18. If the replacement distance is not less than the visibility distance, the process proceeds to step S106. If the replacement distance is less than the visibility distance, the process proceeds to step S107.

In step S106, the controller 19 uses the replacement distance for each type approved in step S102 to update only the visibility distance associated with the category classifying the relevant type. After updating, the update process ends.

In step S107, the controller 19 uses the replacement distance for each type approved in step S102 to update the visibility distance associated with all categories. After updating, the update process ends.

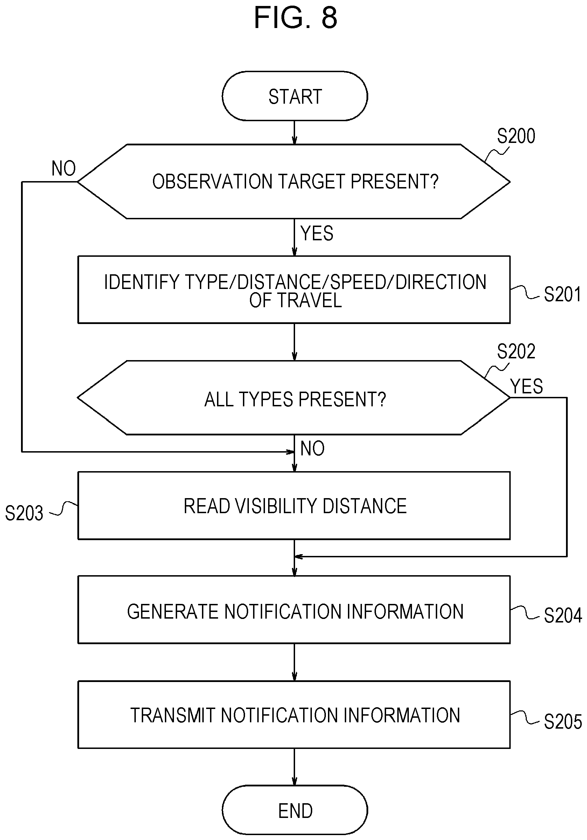

The flowchart in FIG. 8 will be used to describe a notification information transmission process executed by the controller 19 in the present embodiment. The notification information transmission process starts when the vehicle 13 is present within the communication range of the observation device 10.

In step S200, the controller 19 determines whether the most recent observation result includes an observation target. If the observation result includes at least one observation target, the process proceeds to step S201. If the observation result includes no observation targets, the process proceeds to step S203.

In step S201, the controller 19 identifies the type, distance from the observation device 10, speed, and direction of travel of the observation target confirmed to be present in step S200. After identification, the process proceeds to step S202.

In step S202, the controller 19 determines whether the types identified in step S201 include all types of observation targets. If at least one type is not present, the process proceeds to step S203. If all types are present, the process proceeds to step S204.

In step S203, the controller 19 reads out from the storage 18 the visibility distance associated with the category classifying a type that is not present. After readout, the process proceeds to step S204.

In step S204, the controller 19 generates notification information. The notification information includes the distance, speed, and direction of travel for each type identified in step S201 and/or the information pertaining to visibility distance for each category read out in step S203. After generation of the notification information, the process proceeds to step S205. Note that the notification information does not necessarily include the information pertaining to visibility distance for all categories. For example, the controller 19 does not necessarily include, in the notification information, the information pertaining to visibility distance for a category cased on a type of observation target having a low anticipated speed until the visibility distance is less than or equal to the warning distance. This arrangement keeps the notification information from including an excessive amount of information. The controller 19 may also add, to the notification information, information indicating the presence of an observation target detected by the observation device 10. Thus, the controller 19 can issue a warning about the approach or present of an observation target to the vehicle 13 receiving the abandonment information.

In step S205, the controller 19 controls the communicator 20 to transmit the notification information generated in step S204 to the vehicle 13 within the communication range of the observation device 10. After transmission of the notification information, the notification information transmission process ends.

In the present embodiment, the observation device 10 with a configuration like the above identifies the distance to the position of an observation target on the basis of an observation result from the observation unit 17, and uses the identified distance as a basis for updating the visibility distance stored in the storage 18. According to such a configuration, the observation device 10 may ascertain the detection range for the presence or absence of an observation target according to a change in the surrounding environment. Consequently, the observation device 10 that has ascertained the detection range may convey the reliability regarding a lack of presence notifications outside the detection range to a service recipient, such as a driver and a self-driving vehicle or other driving-assisted vehicle. As a result, the observation device 10 causes the recipient to adjust behavior or control according to the reliability, thereby improving usefulness.

In the present embodiment, the observation device 10 may identify the type of observation target on the basis of the observation result. According to such a configuration, the observation device 10 may recognize a maximum identifiable distance for each type of observation target.

In the observation device 10 according to the present embodiment, the storage 18 stores a visibility distance associated with a respective one of categories based on type. According to such a configuration, the observation device 10 may recognize the visibility distance appropriately with respect to the identifiability in the observation result that may vary depending on the type of observation target.

In the observation device 10 according to the present embodiment, the categories include speed categories classified on the basis of anticipated speed. The desired range for detecting the presence or absence of an observation target is different depending on the speed of the observation target. Therefore, the observation device 10 with the configuration described above may manage the visibility distance appropriately.

In the observation device 10 according to the present embodiment, the observation unit 17 can detect the temperature of a target, and the categories include temperature categories classified on the basis of anticipated temperature. When the observation unit 17 includes a FIR camera or other sensor that can detect temperature, the ability to detect the observation target may depend on the temperature. To address such an event, the observation device 10 with the configuration described above divides the types of observation targets into categories with approximately similar detection ranges. Thus, the observation device 10 may update the visibility distance for various types of observation targets frequently while maintaining the accuracy of the visibility distance.

In the present embodiment, the visibility distance updated for a first category of an identified type of observation target may be less than the visibility distance associated with the first category stored in the storage 18. In this case, the observation device 10 may execute a common update process to also update the visibility distance associated with a second category different from the first category. In the common update process, the observation device 10 reduces the visibility distance associated with the second category to the visibility distance updated for the first category. According to such a configuration, the observation device 10 reduces the visibility distance even if the observation device 10 cannot identify the presence of some types of observation targets for a long time from an observation result. Thus, the observation device 10 may have improved safety.

In the present embodiment, the observation device 10 executes the common update process upon meeting a first condition. According to such a configuration, the observation device 10 executes the common update process in a situation where identification of the maximum identifiable distance for each type is difficult due to low traffic volume. Consequently, the observation device 10 limits execution of the common update process to situations where the common update process is necessary. Thus, the observation device 10 may have improved accuracy of the visibility distance by category in addition to improved safety.

In the present embodiment, the first condition may be met after the common update process, and the visibility distance updated for the category of the type of observation target identified in a new observation result may be greater than the visibility distance associated with the relevant category stored in the storage 18. In this case, the observation device 10 updates the visibility distance associated with the relevant category, and does not update the visibility distance associated with a category other than the relevant category. According to such a configuration, when the viewing distance for the category of a newly identified type increases after the common update process updates the visibility distance for the category associated with a type that was not identified from the observation result, the observation device 10 updates only the category for the identified type. Consequently, if the observation device 10 has updated a visibility distance without an actual identification result, the observation device 10 may update the visibility distance according to an actual identification result later.

In the present embodiment, when the first condition is not met, the observation device 10 updates the visibility distance for the category of the identified type of observation target. In the case of missing the first condition serving as the condition on executing the common update process, the identification frequency increases for the maximum identifiable distance for each type of observation target, and a compromise of safety due to a low identification frequency is less likely to occur. For such an event, the observation device 10 with the configuration described above may have improved accuracy of the visibility distance by category in the case of missing the condition on executing the common update process.

In the present embodiment, the observation device 10 can generate notification information including an indication of the presence or absence of an observation target. If an observation target is not present in an observation result, the observation device 10 creates and includes information pertaining to visibility distance in the notification information on the basis of the type of observation target and the visibility distance associated with the relevant type. According to such a configuration, the observation device 10 may cause a service recipient, such as a driver and a self-driving vehicle or other driving-assisted vehicle, to recognize the reliability regarding the absence of an observation target.

An embodiment according to the present disclosure has been described on the basis of the drawings and examples, but note that it would be easy for a person skilled in the art to make various variations or revisions on the basis of the present disclosure. Consequently, it should be understood that these variations or revisions are included in the scope of the present disclosure. For example, the functions and the like included in each component, each step, and the like may be rearranged in logically non-contradictory ways, and it is possible to combine a plurality of components, steps, or the like into one or divide a component, step, or the like.

Many aspects of the content of the present disclosure are illustrated as a series of operations to be executed by a computer system or other hardware capable of executing program instructions. The computer system or other hardware includes, for example, a general-purpose computer, a personal computer (PC), a special-purpose computer, a workstation, a personal communications system (PCS), a mobile (cellular) phone, a mobile phone with data processing functions, an RFID receiver, a game console, an electronic notepad, a laptop computer, a Global Positioning System (GPS) receiver, or some other programmable data processing device. Note that in each embodiment, various operations are performed by a dedicated circuit (for example, individual logic gates interconnected to perform a specific function) implemented with program instructions (software), by a logic block or program module executed by at least one processor, or the like. The at least one processor that executes the logic block, program module, or the like includes, for example, at least one microprocessor, central processing unit (CPU), application-specific integrated circuit (ASIC), digital signal processor (DSP), programmable logic device (PLD), field-programmable gate array (FPGA), processor, controller, microcontroller, microprocessor, electronic device, or other device designed to execute the functions described herein, and/or a combination of any of the above. The embodiment illustrated herein is implemented by hardware, software, firmware, middleware, microcode, or a combination of any of the above. An instruction may be program code or a code segment for executing a required task. An instruction can be stored in a non-transitory machine-readable storage medium or other medium. A code segment may represent any combination of procedures, functions, subprograms, programs, routines, subroutines, modules, software packages, classes or instructions, data structures or program statements. A code segment transmits and/or receives information, a data argument, a variable, or stored content to and/or from another code segment or a hardware circuit, thereby connecting the code segment to the other code segment or hardware circuit.

A circuit configuration such as a transmitter, receiver, transmission unit, reception unit, or transceiver provides functionality by using any of various wireless communication networks, such as a WWAN, WLAN, or WPAN, for example. The WWAN can be a CDMA network, TDMA network, FDMA network, OFDMA network, SC-FDMA network, or the like. The CDMA network can implement one or more radio access technologies (RATs), such as CDMA2000 or Wideband-CDMA (W-CDMA). CDMA2000 includes the IS-95, IS-2000, and IS-856 standards. The TDMA network can implement GSM, Digital Advanced Phone System (D-AMPS), or other RATs. GSM and W-CDMA are described in documentation published by a consortium called the 3rd Generation Partnership Project (3GPP). CDMA2000 is described in documentation published by a consortium called the 3rd Generation Partnership Project 2 (3GPP2). The WLAN can be an IEEE 802.11x network. The WPAN can be a Bluetooth network, an IEEE 802.15x network, or other type of network. CDMA can be implemented as a radio technology such as Universal Terrestrial Radio Access (UTRA) or CDMA2000. TDMA can be implemented by a radio technology such as GSM/General Packet Radio Service (GPRS)/Enhanced Data Rates for GSM Evolution (EDGE). OFDMA can be implemented by a radio technology such as the Institute of Electrical and Electronics Engineers (IEEE) 802.11 (Wi-Fi), IEEE 802.16 (WiMAX), IEEE 802.20, or Evolved UTRA (E-UTRA). These technologies can be used for any combination of WWAN, WLAN, and/or WPAN. These technologies can be implemented for use with an Ultra Mobile Broadband (UMB) network, a High Rate Packet Data (HRPD) network, a CDMA2000 1X network, GSM, Long-Term Evolution (LTE), or the like.

Note that the description herein discloses a system having various modules and/or units to perform specific functions and schematically illustrates these modules and units to briefly describe the functionality thereof. However, it should be understood that the description here does not necessarily illustrate specific hardware and/or software. In that sense, these modules, units, and other components may be hardware and/or software implemented to substantially perform the specific functions described herein. The various functions of different components may be hardware and/or software in any combination or in isolation, and can be used separately or in any combination with each other. Input/output, or an I/O device or user interface, including but not limited to a keyboard, a display, a touch screen, a pointing device, and the like, can be connected to the system directly or through an intervening I/O controller. In this way, various aspects of the content of the present disclosure can be implemented in many different forms, and all such forms are to be included in the scope of the content of the present disclosure.

### REFERENCE SIGNS

- 10: observation device
- 11: communication system
- 12: road
- 13: vehicle
- 14: pedestrian
- 15: traffic signal
- 16: pedestrian crossing
- 17: observation unit
- 18: storage
- 19: controller
- 20: communicator
- 22: structure
- dx: detection axis

## Claims

1. An observation device comprising:
an observation unit configured to observe a predetermined area;
storage configured to store a visibility distance, the visibility distance being a maximum distance at which an observation target is identifiable within the predetermined area; and
a controller configured to identify the distance to the position of the observation target on a basis of an observation result from the observation unit, and use the identified distance as a basis for updating the visibility distance stored in the storage.

2. The observation device according to claim 1, wherein the controller is configured to identify a type of the observation target on a basis of an observation result from the observation unit.

3. The observation device according to claim 2, wherein
the controller is configured to identify the observation target by classifying the observation target into one of a plurality of types, and
the storage is configured to store the visibility distance associated with a respective one of categories based on the types.

4. The observation device according to claim 3, wherein the categories include speed categories classified on a basis of a speed anticipated for the observation target.

5. The observation device according to claim 3 or 4, wherein
the observation unit is configured to detect a temperature of the target, and
the categories include temperature categories classified on a basis of a temperature anticipated for the observation target.

6. The observation device according to any one of claims 3 to 5, wherein when the visibility distance updated for a first category of an identified type of the observation target is less than a visibility distance associated with the first category stored in the storage, the controller is configured to execute a common update process to also update a visibility distance associated with a second category different from the first category, the visibility distance associated with the second category being reduced to the visibility distance updated for the first category.

7. The observation device according to claim 6, wherein the controller is configured to execute the common update process upon meeting a first condition regarding a decrease in a number of observation targets passing through the predetermined area.

8. The observation device according to claim 6, wherein when the first condition is met after the common update process and the visibility distance updated for the category of the type of the observation target identified in a new observation result is greater than the visibility distance associated with the relevant category stored in the storage, the controller is configured to update the visibility distance associated with the relevant category, and does not update the visibility distance associated with a category other than the relevant category.

9. The observation device according to claim 8, wherein when the first condition is not met, the controller is configured to update the visibility distance only for the category of the identified type of observation target.

10. The observation device according to any one of claims 2 to 9, wherein
the controller is configured to generate notification information including an indication of the presence or absence of the observation target, and
when the observation target is not present in an observation result, the controller is configured to create and include information pertaining to the visibility distance in the notification information on a basis of the type of the observation target and the visibility distance associated with the relevant type.

11. The observation device according to claim 10, wherein when the visibility distance for a certain category is less than or equal to a predetermined value, the controller is configured to not include visibility distance corresponding to the certain category in the notification information.
